# EUROPÄISCHE PATENTSCHRIFT

(11) **EP 0 458 425 B1**
(45) Veröffentlichungstag und Bekanntmachung des Hinweises auf die Patenterteilung: **06.09.1995**
(21) Anmeldenummer: 91250094.9
(22) Anmeldetag: 09.04.1991
(51) Int. Cl.: B06B 1/04

(54) **Elektrodynamischer Permanentmagnetwandler**
Electromagnetic transducer with permanent magnet
Transducteur électromagnétique à aimant permanent

(30) Priorität: 21.05.1990 DE 4016740
(43) Veröffentlichungstag der Anmeldung: 27.11.1991
(73) Patentinhaber: MANNESMANN Aktiengesellschaft, 40027 Düsseldorf (DE)
(72) Erfinder: Graff, Alfred, Dipl.-Phys., W-4300 Essen 16 (DE); Rohde, Hans-Jürgen, W-4100 Duisburg 28 (DE)
(74) Vertreter: Meissner, Peter E., Dipl.-Ing.

(56) Entgegenhaltungen:
- DE-A- 2 657 957
- FR-A- 2 637 441
- GB-A- 2 006 433
- PROCEEDINGS OF THE 3RD INTERNATIONAL SYMPOSIUM ON NONDESTRUCTIVE CHARACTERIZATION OF MATERIALS 6. Oktober 1988, SAARBRUECKEN, FRG Seiten 681 - 690 P.HOELLER ET AL. 'EMUS-systems for stress and texture evaluation by ultrasound"
- MATERIALS EVALUATION Bd. 45, Oktober 1987, USA Seiten 1166 - 1183 B.W. MAXFIELD ET AL. 'Evaluating EMAT designs for selected applications'

## Beschreibung

Die Erfindung betrifft einen elektrodynamischen Permanentmagnetwandler gemaß Oberbegriff des Patentanspruches 1.

Elektrodynamische Permanentmagnetwandler werden in der zerstörungsfreien Prüfung von Werkstücken mittels Ultraschall eingesetzt. Eine Übersicht über den derzeitigen Stand in der Entwicklung solcher elektrodynamischer Permanentmagnetsysteme geht aus "Materials Evaluation/45/ October 1987/ Seiten 1166 ff" hervor. Hieraus ist bekannt, einen Permanentmagnet in Kombination mit einer spiraligen Flachspule als Wandlerspule einzusetzen. Bei dieser bekannten Ausführungsform handelt es sich um ein offenes magnetisches System, was bedeutet, daß der Permanentmagnet mit einer seiner Polflächen zur Werkstückoberfläche hin ausgerichtet ist und dort Magnetfeldlinien einbringt und die Magnetfeldlinien ansonsten einen Rückschluß über Luft haben. In der zwischen Permanentmagnet und Werkstückoberfläche angeordneten Wandlerspule werden hochfrequente Sendeimpulse erzeugt, dir in der zu prüfenden Werkstückoberfläche Wirbelströme induzieren und mit dem eingebrachten statischen Magnetfeld wechselwirken und Ultraschall erzeugen. Nachteilig bei dieser bekannten Anordnung ist es, daß durch die Anordnung von nur einer Wandlerspule an der an die zu prüfende Werkstückoberfläche anzulegenden Seite des Permanentmagnetwandlers nur entweder gesendet oder empfangen werden kann. Zum gleichzeitigen Senden und Empfangen von Ultraschallwellen wäre somit bei der Verwendung dieses bekannten Permanentmagnetwandlers eine Anordnung bestehend aus zwei getrennten Permanentmagnetwandlern nötig.

Des weiteren wird bei diesem bekannten Permanentmagnetwandler nur ein Teil des gesamt verfügbaren Magnetfeldes zur Ultraschallerzeugung ausgenutzt, weil bei der Rückschlußbildung über Luft nur unzureichend große felddichten erreicht werden können. Der elektrische Anschluß dieses bekannten Permanentmagnetwandlers wird durch einen seitlich angeordneten, weit über den Randbereich des Gehäuses hinausragenden Koaxialkabel-Anschluß bewerkstelligt. Nachteilig ist hierbei, daß durch diese Anordnung des Koaxialkabel-Anschlusses die Handhabung erschwert wird.

Aus FR-A-2 637 441 (oder DE-A-38 34 248) ist einer Permanentmagnetwandler gemäß dem Oberbegriff des Anspruchs 1 bekannt, der mit zwei Wandlerspulen zum gleichzeitigen Senden und Empfangen von Ultraschallwellen versehen ist.

Aufgabe der Erfindung ist es daher, den Permanentmagnetwandler derart weiterzubilden, daß genügend hohe Magnetfelddichten erzeugbar und gleichzeitiges Senden und Empfangen von Ultraschallwellen möglich ist, wobei die gesamte Anordnung kleinbauend und für die manuelle Prüfung geeignet sein soll.

Die gestellte Aufgabe wird bei einem elektrodynamischen Permanentmagnetwandler der gattungsgemäßen Art durch eine Kombination der kennzeichnenden Merkmale des Patentanspruches 1 gelöst. Weitere vorteilhafte Ausgestaltungen ergeben sich aus den kennzeichnenden Merkmalen der Unteransprüche.

Die erfindungsgemäße Verwendung eines weichmagnetischen Gehäuses, die mit der zur Werkstückoberfläche abgewandten Polfläche des Permanentmagneten in magnetisch leitender Verbindung steht, bildet in sehr vorteilhafter und kompakter Weise den Rückschluß mit dem Werkstück und erhöht somit die Effizienz der Ultraschallerzeugung und -detektion. Durch die Anordnung eines aus unmagnetischem Material bestehenden, innerhalb des Gehäuses angeordneten hohlzylindrischen Körpers, innerhalb dessen der Permanentmagnet angeordnet ist, ergibt sich der Vorteil, daß magnetische Kurzschlüsse parallel zur Polachse des Permanentmagneten ausgeschlossen sind. Die Tatsache, daß der die Wandlerspulen aufnehmende Trägerkörper bündig abschließend mit dem Gehäuse in der Öffnung des Gehäuses angeordnet ist, gewährleistet, daß die Magnetfeldlinien des Permanentmagneten und die Wandlerspulen so nahe wie möglich an die zu prüfende Werkstückoberfläche herangebracht werden können, wobei gleichzeitig gewährleistet ist, daß das Gehäuse im Randbereich ebenfalls ohne Luftspalt an der zu prüfenden Werkstückoberfläche anliegt und somit einen optimalen magnetischen Rückschluß bilden kann. Das Anbringen einer zweiten spiraligen Wandlerspule ermöglicht nun in vorteilhafter Weise das Senden und Empfangen von Ultraschall in einem gemeinsamen Permenentmagnetwandler. Die Anordnung eines separaten Anschlußkastens bei dem erfindungsgemäß vorgeschlagenen elektrodynamischen Permanentmagnetwandler hat den Vorteil, daß in der erfindungsgemäß vorgeschlagenen außermittigen Aussparung passive Leitmittel zur elektrischen Anpassung an eine Signalverarbeitungseinheit untergebracht werden können. Die Tatsache, daß die Aussparung außermittig angeordnet ist, ermöglicht vorteilhafterweise, daß erfindungsgemäß die Koaxialkabel-Anschlüsse nahezu vollständig in den elektrodynamischen Permanentmagnetwandler versenkt angeordnet werden können. Dies führt im weiteren zu dem Vorteil, daß der erfindungsgemäß vorgeschlagene elektrodynamische Permanentmagnetwandler gut handhabbar ist.

Die Erfindung wird in den nachfolgenden Zeichnungen näher erläutert.

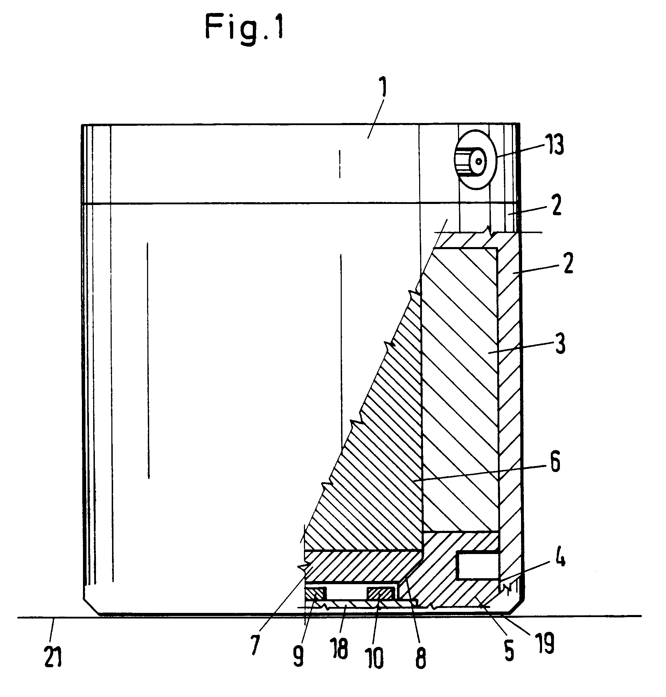

Es zeigen:
- Figur 1: Gesamtübersicht elektrodynamischer Permanentmagnetwandler
- Figur 2: Anschlußkasten
- Figur 3: Gehäuse aus Weicheisen
- Figur 4: Hohlzylindrischer Körper als Permanentmagnetführung
- Figur 5: Trägerkörper zur Aufnahme der Wandlerspulen und des Konzentratorkörpers
In der Gesamtdarstellung der Figur 1 wird die Anordnung aller Einzelteile zueinander deutlich. Der Anschlußkasten 1 ist auf dem weichmagnetischen Gehäuse 2 angeordnet und in seiner Form und seinem Außenmaß an das weichmagnetische Gehäuse angepaßt. Daraus ergibt sich dann eine insgesamt zylindrische Form des Permanentmagnetwandlers. Innerhalb des weichmagnetischen Gehäuses 2 ist der hohlzylindrische Körper 3 angeordnet, der aus einem unmagnetischen Material, wie zum Beispiel Aluminium besteht. Im unteren Teil des Permanentmagnetwandlers ist in der dort vorgesehenen Öffnung 4, die an der zu prüfenden Werkstückoberfläche 21 anzulegen ist, bündig mit der Außenfläche des Permanentmagnetwandlers der Trägerkörper 5 angeordnet. Innerhalb der gesamten Anordnung sind dann Permanentmagnet 6 und Konzentratorkörper 7 angeordnet. Der Konzentratorkörper 7 liegt dabei bündig im konischen Teil der Ausnehmung 8 des Trägerkörpers 5 und bündig an der der Werkstückoberfläche zugewandten Polfläche des Permanentmagneten 6. Die Wandlerspulen 9,10 sind in der dafür vorgesehenen Ausnehmung in der an die Werkstückoberfläche anzulegenden Außenfläche 19 des Trägerkörpers 5 angeordnet. Die Kontaktierung der Wandlerspulen 9,10 erfolgt dabei über bis zum Anschlußkasten 1 geführte Bohrungen durch den Trägerkörper 5, den hohlzylindrischen Körper 3 und durch den der Werkstückoberfläche abgewandten geschlossenen Boden des Gehäuses 2. Am Anschlußkasten ist eine der Bohrungen 13 zu erkennen, innerhalb dessen ein Koaxialkabel-Anschluß vollständig versenkt angeordnet ist.

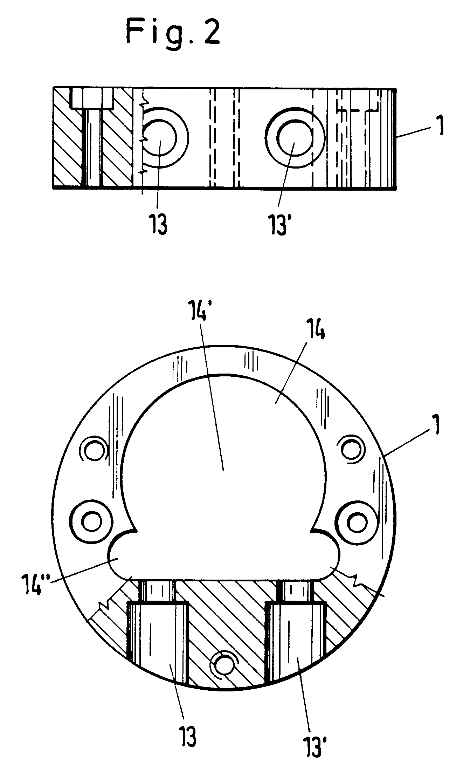

Figur 2 zeigt den Anschlußkasten 1 in Seitenansicht und Draufsicht. Die Draufsicht zeigt die Anordnung der Ausnehmung 14 und eine fertigungstechnisch vorteilhafte Form der Ausnehmung. Es handelt sich dabei um eine exzentrisch angeordnete Durchgangsbohrung 14' mit einer sekantenförmig angesetzten geraden Ausfräsung 14''. Die Bohrungen 13,13' zur Aufnahme der Koaxialkabel-Anschlüsse sind seitlich bis an die Ausfräsung 14'' herangeführt und dort mit dem Anschlußkasten 1 verbunden. Innerhalb der Ausnehmung 14 können passive Leitmittel, wie zum Beispiel Kabel, Leitungen oder ohm'sche Widerstände angeordnet werden. Der Anschlußkasten 1 ist zumindest von einer Seite mit einem Deckel verschließbar.

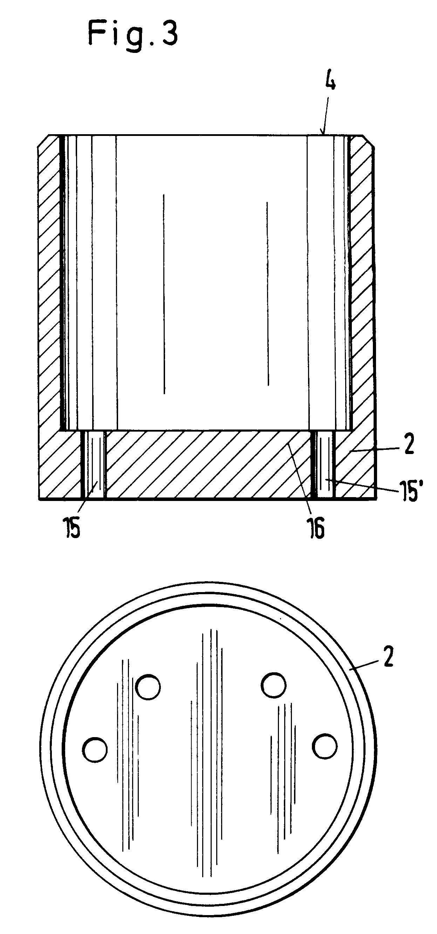

Figur 3 zeigt das weichmagnetische Gehäuse 2. Die Öffnung 4 im Gehäuse 2 ist hierbei so groß gewählt, daß sich der Durchmesser der Öffnung über den gesamten Innendurchmesser des Gehäuses erstreckt. Dies gewährleistet eine einfache Montage und ist zudem fertigungstechnisch unkompliziert. In dem geschlossenen Boden 16 des Gehäuses 2 sind Bohrungen 15,15' angebracht, die zum Teil für die Kabelführung und zum Teil für die Befestigung der einzelnen Segmente des Permanentmagnetwandlers dienen.

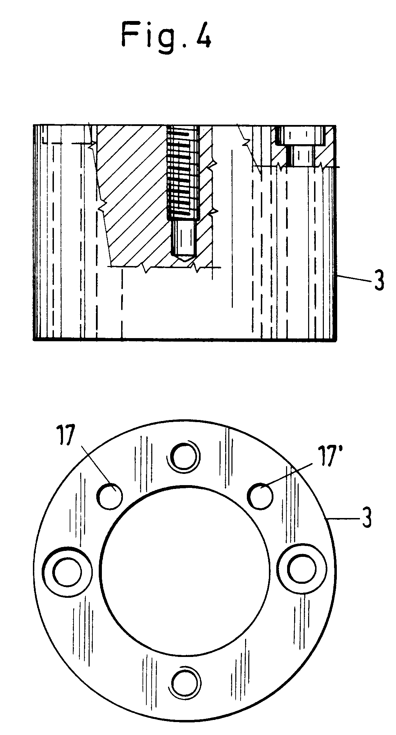

Figur 4 zeigt den hohlzylindrischen Körper 3, dessen Außendurchmesser ein Paßmaß bezüglich des Gehäuseinnendurchmessers bildet. Die Durchgangsbohrungen 17,17' sind um einen Winkel von 90 Grad versetzt angeordnet und decken sich mit den Bohrungen im Gehäuseboden. Diese Bohrungen dienen zur Aufnahme und Weiterleitung der elektrischen Anschlußkabel zwischen den Wandlerspulen 9,10 und dem elektrischen Anschlußkasten 1. Nach dem Zusammenbau werden diese Durchgangslöcher mit einem Kunststoff vergossen.

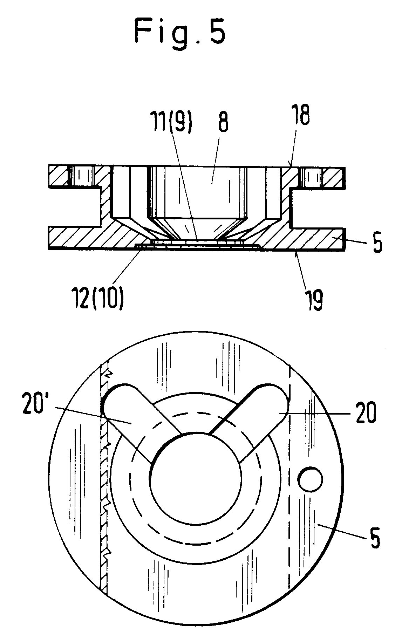

Figur 5 zeigt den Trägerkörper 5 zur Aufnahme des Konzentrators und der Wandlerspulen. Der einzupassende Konzentratorkörper ist hierbei in seinen Dimensionen so groß gewählt, daß zumindest der konische Teil der Ausnehmung 8 ausgefüllt ist. Der Permanentmagnet liegt dabei direkt an dem Konzentratorkörper an. An der der Werkstückoberfläche zugewandten Außenfläche 19 des Trägerkörpers 5 sind die Ausnehmungen 11,12 erkennbar. Die Draufsicht zeigt zwei um einen Winkel von 90 Grad versetzt angeordnete zusätzliche Ausnehmungen 20,20', die dazu dienen, die Anschlußdrähte zu den Wandlerspulen 9,10 aufzunehmen und durch die in entsprechender Stellung zur Deckung kommenden Bohrungen 17,17' im hohlzylindrischen Körper 3 und dem Gehäuse 2 hindurchzuführen.

Figur 1 zeigt die Scheibe 18 mit der Anordnung der Wandlerspulen 9,10. Die Scheibe ist im montierten Zustand derart in die erste Ausnehmung 12 eingepaßt, daß die Wandlerspulen in die zweite Ausnehmung 11 hineinragen. Die der Werkstückoberfläche zugewandte Seite der Scheibe 18 schließt bündig mit der Außenfläche 19 des Trägerkörpers 5 ab.

Die Gesamthöhe eines solchen Permanentmagnetwandlers beträgt kaum mehr als 50 mm und findet deshalb vornehmlich seinen Einsatz im Handbetrieb. Der Permanentmagnetwandler läßt sich natürlich auch ortsfest in einer komplexen Prüfanlage einsetzen.

## Patentansprüche

1. Elektrodynamischer Permanentmagnetwandler bestehend aus einem an eine zu prüfende Werkstückoberfläche (21) anzulegenden Gehäuse (2), innerhalb dessen ein Permanentmagnet (6), der senkrecht zur Werkstückoberfläche (21) aufmagnetisiert ist, und aus zwei Wandlerspulen (9,10) zum gleichzeitigen Senden und Empfangen von Ultraschallwellen, wobei die beiden Wandlerspulen als spiralige Flachspule ausgebildet und in der Nähe der zu prüfenden Werkstückoberfläche (21) angeordnet und mit am Gehäuse (2) angebrachten elektrischen Anschlüssen verbunden sind, und wobei die zweite Wandlerspule (10) kreisringförmig um die erste Wandlerspule (9) herum angeordnet ist und der Innendurchmesser der zweiten Wandlerspule (10) größer als der Außendurchmesser der ersten Wandlerspule (9) ist,
**gekennzeichnet durch** die Kombination folgender Merkmale,
- daß das Gehäuse (2) aus einem weichmagnetischen Material besteht und mit einer der Werkstückoberfläche (21) zugewandten Öffnung (4) versehen ist,
- daß innerhalb des Gehäuses (2) ein aus unmagnetischem Material bestehender hohlzylindrischer Körper (3) eingepaßt und innerhalb dessen der Permanentmagnet (6) angeordnet ist,
- daß die der Werkstückoberfläche abgewandte Polfläche an der entsprechenden Gehäuseinnenwand magnetisch leitend anliegt, -
- daß bündig abschließend mit dem Gehäuse (2) in der Öffnung (4) ein die Wandlerspule (9) aufnehmender Trägerkörper (5) angeordnet und innerhalb dessen ein weichmagnetischer Konzentratorkörper (7) eingepaßt ist,
- daß oberhalb des geschlossenen Endes des weichmagnetischen Gehäuses (2) ein Anschlußkasten (1) angeordnet ist, der aus einem unmagnetischen Material besteht.

2. Elektrodynamischer Permanentmagnetwandler nach Anspruch 1,
**dadurch gekennzeichnet,**
daß der Trägerkörper (5) aus einem unmagnetischen Material besteht und eine sich zur Werkstückoberfläche hin konisch verjüngte Ausnehmung (8) aufweist, und daß der Konzentratorkörper (7) mit der gleichen Konizität versehen und mindestens den konischen Bereich der Ausnehmung (8) ausfüllend angeordnet ist.

3. Elektrodynamischer Permanentmagnetwandler nach den Ansprüchen 1 und 2,
**dadurch gekennzeichnet,**
daß der Trägerkörper (5) an der der Werkstückoberfläche zugewandten Seite (19), eine erste kreisscheibenförmige Ausnehmung (12) aufweist und daß eine zweite kreisscheibenförmige Ausnehmung (11) mit kleinerem Durchmesser und größerer Tiefe innerhalb der ersten Ausnehmung (12) angeordnet ist.

4. Elektrodynamischer Permanentmagnetwandler nach Anspruch 3,
**dadurch gekennzeichnet,**
daß die Wandlerspulen (9,10) gemeinsam auf einer der Seiten einer kreisförmigen Scheibe (18) befestigt sind, daß die Scheibe (18) in die erste Ausnehmung (12) des Trägerkörpers (5) derart eingepaßt ist, daß die Wandlerspulen (9,10) in die zweite Ausnehmung (11) hineinragen und der noch verbleibende Raum in der zweiten Ausnehmung (11) mit einer Kunststoffmasse vergossen ist.

5. Elektrodynamischer Permanentmagnetwandler nach Anspruch 4,
**dadurch gekennzeichnet,**
daß die Scheibe (18) aus einem verschleißarmen Kunststoff besteht.

6. Elektrodynamischer Permanentmagnetwandler nach Anspruch 1,
**dadurch gekennzeichnet,**
daß seitlich durch den Anschlußkasten (1) in die Ausnehmung (14) hineinführende Bohrungen (13,13') angeordnet sind und daß die elektrischen Anschlüsse aus in den Bohrungen (13,13') zumindest teilweise versenkten Koaxialkabel-Anschlüssen bestehen.

## Claims

1. Electrodynamic permanent magnet transducer consisting of a housing (2) to be applied to a workpiece surface (21) to be tested, inside which housing a permanent magnet (6) [is provided], which is magnetised perpendicular to the workpiece surface (21) and which consists of two transducer coils (9, 10) for the simultaneous transmission and reception of ultrasound waves, the two transducer coils being formed as spiral flat coils which are disposed close to the workpiece surface (21) to be tested and are connected to electrical terminals mounted on the housing (2), and wherein the second transducer coil (10) is disposed in a circle around the first transducer coil (9) and the inner diameter of the second transducer coil (10) is larger than the outer diameter of the first transducer coil (9),
characterised by the combination of the following features,
- the housing (2) consists of a soft magnetic material and is provided with an aperture (4) facing the workpiece surface (21),
- in that inside the housing (2) a hollow-cylindrical body (3) composed of non-magnetic material is fitted, with the permanent magnet (6) inside said hollow-cylindrical body,
- the pole face remote from the workpiece surface abuts the corresponding housing inner wall so as to be magnetically conductive,
- in that a carrier body (5) receiving the transducer coil (9) is disposed flush with the housing (2) in the aperture (4) and a soft-magnetic concentrator body (7) is fitted inside the carrier body (5),
- in that a junction box (1) composed of a non-magnetic material is disposed above the closed end of the soft-magnetic housing (2).

2. Electrodynamic permanent magnet transducer according to claim 1, characterised in that the carrier body (5) consists of a non-magnetic material and has a recess (8) tapering conically towards the workpiece surface, and in that the concentrator body (7) has the same conicity and is arranged so as to fill at least the conical region of the recess (8).

3. Electrodynamic permanent magnet transducer according to claims 1 and 2, characterised in that the carrier body (5) has on the side (19) facing the workpiece surface a first circular recess (12), and in that a second circular recess (11) having a smaller diameter and a greater depth is disposed inside the first recess (12).

4. Electrodynamic permanent magnet transducer according to claim 3, characterised in that the transducer coils (9, 10) are fixed together on one side of a circular disc (18), in that the disc (18) fits into the first recess (12) of the carrier body (5) in such a manner that the transducer coils (9, 10) project into the second recess (11) and the remaining space in the second recess (11) is filled with a plastics compound.

5. Electrodynamic permanent magnet transducer according to claim 4, characterised in that the disc (18) consists of a low-abrasion plastics material.

6. Electrodynamic permanent magnet transducer according to claim 1, characterised in that bores (13, 13') are provided which lead laterally through the junction box (1) into the recess (4) and in that the electrical terminals consist of coaxial cable terminals at least partly countersunk in the bores (13, 13').

## Revendications

1. Transducteur électrodynamique à aimant permanent comportant un boîtier (2) à disposer contre une surface (21) d'une pièce à analyser, à l'intérieur duquel est agencé un aimant permanent (6) qui est magnétisé perpendiculairement à la surface (21) de la pièce et deux bobines transductrices (9,10) pour l'émission et la réception simultanées d'ondes ultrasonores, les deux bobines transductrices étant réalisées sous forme de bobines planes en spirales et étant agencées à proximité de la surface (21) de la pièce à analyser et étant reliées par des raccordements électriques agencés sur le boîtier (2), et la seconde bobine transductrice (10) étant agencée en forme d'anneau circulaire autour de la première bobine transductrice (9) et le diamètre interne de la seconde bobine transductrice (10) étant plus grand que le diamètre externe de la première bobine transductrice (9),
caractérisé par la combinaison des caractéristiques suivantes,
- en ce que le boîtier (2) est constitué d'un matériau magnétique doux et présente une ouverture (4) en regard de la surface (21) de la pièce,
- en ce qu'à l'intérieur du boîtier (2) est adapté un corps (3) de forme cylindrique creuse constitué d'un matériau non magnétique, à l'intérieur duquel est agencé l'aimant permanent (6),
- en ce que la face polaire opposée à la surface de la pièce repose de façon conductrice magnétiquement contre la paroi interne correspondante du boîtier,
- en ce qu'un corps porteur (5) recevant la bobine transductrice (9) est agencé dans l'ouverture (4) en étant raccordé à surface plane au boîtier (2), à l'intérieur duquel corps porteur est adapté un corps de concentrateur (7) magnétique doux,
- en ce qu'un caisson de raccordement (1) est agencé au-dessus de l'extrémité fermée du boîtier (2) magnétique doux, caisson de raccordement constitué d'un matériau non magnétique.

2. Transducteur électrodynamique à aimant permanent selon la revendication 1,
caractérisé en ce que le corps porteur (5) est constitué d'un matériau non magnétique et présente un évidement (8) diminuant de façon conique vers la surface de la pièce, et en ce que le corps de concentrateur (7) présente la même conicité et est agencé de façon à remplir au moins la zone conique de l'évidement (8).

3. Transducteur électrodynamique à aimant permanent selon les revendications 1 et 2,
caractérisé en ce que le corps porteur (5) présente, sur la face (19) en regard de la surface de la pièce, un premier évidement (12) sous forme d'un disque circulaire, et en ce qu'un second évidement (11) sous forme d'un disque circulaire, présentant un diamètre plus petit et une profondeur plus grande, est pratiqué à l'intérieur du premier évidement (12).

4. Transducteur électrodynamique à aimant permanent selon la revendication 3,
caractérisé en ce que les bobines transductrices (9,10) sont fixées conjointement sur l'une des faces d'un disque (18) de forme circulaire, et en ce que le disque (18) est adapté dans le premier évidement (12) du corps porteur (5) de sorte que les bobines transductrices (9,10) font saillie dans le second évidement (11) et l'espace restant encore dans le second évidement (11) est rempli d'une masse de matière synthétique.

5. Transducteur électrodynamique à aimant permanent selon la revendication 4,
caractérisé en ce que le disque (18) est constitué d'une matière synthétique à faible usure.

6. Transducteur électrodynamique à aimant permanent selon la revendication 1,
caractérisé en ce que des perçages (13,13') sont pratiqués latéralement à travers le caisson de raccordement (1) jusque dans l'évidement (14), et en ce que les raccordements électriques sont constitués de raccordements à câbles coaxiaux plongés au moins partiellement dans les perçages (13,13').
